# EUROPÄISCHE PATENTSCHRIFT

(11) **EP 0 789 447 B1**
(45) Veröffentlichungstag und Bekanntmachung des Hinweises auf die Patenterteilung: **30.08.2000**
(21) Anmeldenummer: 96115609.8
(22) Anmeldetag: 28.09.1996
(51) Int. Cl.: H02P 7/285, H02M 3/155

(54) **Akkugespeistes Elektrokleingerät**
Accumulator-fed small sized electric appliance
Petit appareil électrique alimenté par accumulateur

(30) Priorität: 07.02.1996 DE 19604434
(43) Veröffentlichungstag der Anmeldung: 13.08.1997
(73) Patentinhaber: Schröcker, Rainer, Dipl.-Ing., D-71229 Leonberg (DE)
(72) Erfinder: Schröcker, Rainer, Dipl.-Ing., D-71229 Leonberg (DE)
(74) Vertreter: Patentanwälte Rüger, Barthelt & Abel

(56) Entgegenhaltungen:
- EP-A- 0 044 663
- EP-A- 0 685 922
- WO-A-94/09554
- DE-A- 3 611 884
- DE-A- 4 334 863
- PATENT ABSTRACTS OF JAPAN vol. 017, no. 424 (E-1410), 6.August 1993 & JP 05 083986 A (MATSUSHITA ELECTRIC WORKS LTD), 2.April 1993,

## Beschreibung

Akkugespeiste Elektrowerkzeuge, kurz Akkugeräte genannt, haben sich in der Praxis hervorragend bewährt und deswegen zwischenzeitlich weit verbreitet (z.B. DE-A-3.611.884). Ein große Anzahl dieser Akkugeräte sind Bohrmaschinen und Schrauber.

Solche Akkuwerkzeuggeräte enthalten üblicherweise einen permanent erregten Gleichstrommotor sowie einen Nickel-Cadmium-Akku, der über einen Stromsteller an den Motor angeschlossen ist. Der Stromsteller soll eine Regulierung der Drehzahl im Sinne einer Drehzahlverminderung ermöglichen. Der Steller arbeitet mit einem gesteuerten Halbleiter, der mit einem entsprechenden Tastverhältnis periodisch durchgeschaltet bzw. gesperrt wird. Das Tastverhältnis des Halbleiters führt zusammen mit der Motorinduktivität zu einer vom Tastverhältnis abhängigen Klemmenspannung am Motor.

Diese Art von Steller vermag die Motordrehzahl lediglich zu vermindern. Die maximale Motordrehzahl wird erreicht, wenn der Halbleiter in dem Steller ständig durchgeschaltet gehalten wird, womit die volle Akkuspannung ununterbrochen am Motor anliegt.

Bei genauer Betrachtung des Zusammenspiels von Elektromotor und Akkumulator stellt sich heraus, daß diese Paarung keinesweg so unproblematisch ist wie es auf den ersten Blick erscheint. Der Innenwiderstand moderner Nickel-Cadmium-Akkus mit rauher Elektrode liegt heute durchaus im Milliohmbereich. Die Akkumulatoren sind in der Lage, zerstörungsfrei extrem hohe Ströme abzugeben. Diese Fähigkeit der Akkumulatoren wird von den heute verfügbaren Akkugeräten nicht ausgenutzt bzw. kann nicht ausgenutzt werden. Der Innenwiderstand der verwendeten handelsüblichen Motoren liegt deutlich über dem Innenwiderstand des speisenden Akkus. Da das Drehmoment dem Strom proportional ist, wird das abgegebene Drehmoment von dem im Blockierungsfall maximal fließenden Strom begrenzt, der seinerseits weniger durch den Innenwiderstand des Akkus als vielmehr im wesentlichen durch den Innenwiderstand des Motors festgelegt ist.

Der Innenwiderstand des Motors ergibt sich zum einen aus dem Kupferwiderstand der Ankerwicklung und zum anderen aus den Übergangswiderständen zwischen Bürste und Kollektorlamelle, wobei hier noch dynamische Einflüsse sowie Funkenbildung und Alterung eine Rolle spielen. Insbesondere der Übergangswiderstand am Kollektor läßt sich mit technisch erträglichen Mitteln nicht nennenswert verkleinern. Der Motor würde andernfalls prohibitiv teuer werden.

Ein weiteres Leistungsmerkmal, das von dem Zusammenwirken des Akkumulators mit dem Motor beeinflußt wird, ist die Maximaldrehzahl der Arbeitsspindel bzw. bei gegebener Übersetzung eines Getriebes die Drehzahl des Motors. Die Akkumulatorspannung läßt sich aus praktischen Gründen bei handgeführten Elektrowerkzeugen nicht beliebig vergrößern. Größere Spannungen erfordern höhere Anzahlen von Zellen und verringern damit das Leistungsvolumen, weil die zunehmende Zellenanzahl eine größere Anzahl von Zellengehäusen erfordert, so daß überproportional die in der Gesamtanordnung, bestehend aus mehreren Zellen, gespeicherte elektrische Energie abfällt und die Kosten ebenfalls überproportional steigen, wie sich dies auch aus der EP 0 291 131 A1 ergibt. Die Erfahrung hat gezeigt, daß etwa bei 14,4 V entsprechend zwölf Nickel-Cadmium-Zellen eine vernünftige Obergrenze erreicht wird. Mehr Zellen sind bei brauchbaren Zellkapazitäten in dem handgeführten Elektrogerät nicht unterzubringen. Außerdem steigt die Schwierigkeit, die Zellen gleichmäßig zu laden, mit der Zellenzahl erheblich an. Es wird immer wahrscheinlicher, daß eine der Zellen ausfällt und einen hohen Innenwiderstand bekommt.

Die mit den bekannten Anordnungen erreichbaren maximalen Drehzahlen der Arbeitsspindeln liegen bei den auf dem Markt verfügbaren Akkubohrmaschinen bei ca. 1000 bis 1100 U/min. Größere Drehzahlen ließen sich zwar durch Feldschwächung erreichen, was aber zu einem schlechteren Blockierdrehmoment führt. Das Bestreben geht deswegen zu Feldmagneten, die einen größeren Fluß erzeugen können, der wiederum zu niedrigeren Motordrehzahlen führt.

Es gibt zahlreiche Anwendungen, bei denen Spindeldrehzahlen von 1000 U/min zu gering sind.

Ein denkbarer Ausweg würde zwar darin bestehen, das Motorvolumen zu vergrößern, was aber wiederum die Handlichkeit des Gerätes nachteilig beeinflußt. Insbesondere muß bedacht werden, daß die hohe Drehzahl bzw. das große Drehmoment während der Handhabung des Werkzeugs keineswegs ständig abgefordert wird, das große Motorvolumen aber ständig vorhanden sein muß, um die hohen Drehzahlen bzw. hohen Drehmomente im Bedarfsfalle zur Verfügung zu haben.

Statische Festkörperspannungswandler, die einen Betriebsmodus aufweisen, in dem die Ausgangsgleichspannung größer als die Eingangsgleichspannung ist, sind allgemein bekannt (z.B. EP-A-0.685.922).

Ausgehend hiervon ist es Aufgabe der Erfindung, ein aus einem Akkumulator gespeistes Motorgerät zu schaffen, das es ohne Veränderung der Akkuspannung bei gegebenem Motorvolumen möglich macht, dem Motor bei jeder Drehzahl eine größere Leistung zuzuführen als dies bei gleichem Motor und gleichem Akkumulator bisher möglich ist.

Diese Aufgabe wird erfindungsgemäß durch eine handgeführte Maschine mit den Merkmalen des Anspruches 1 gelöst.

Die Verwendung eines Spannungswandlers, der in zumindest einem Betriebsmodus an seinem Ausgang und damit an den Elektromotor eine Spannung abgeben kann, die größer ist als die Klemmenspannung des Akkumulators, gestattet es im Bedarfsfalle, wenn dieser Betriebsmodus eingeschaltet wird, das Drehmoment an der Motorspindel selbst im oberen Drehzahlbereich entsprechend zu erhöhen. Die höhere Motorspannung ermöglicht bei gegebenem Innenwiderstand des Motors und gegebener Drehzahl die Erhöhung des Ankerstroms und damit die Erhöhung des Drehmoments. Damit kann nicht nur in der Nähe der Blockierdrehzahl, sondern über den gesamten Nennspannungsbereich des Motors das Drehmoment signifikant vergrößert werden.

Derselbe Betriebsmodus des Spannungswandlers ermöglicht auch bei einem anderen Einsatzbereich des Elektrogerätes, die Motordrehzahl über das heute übliche Maß hinaus zu erhöhen. Obwohl die Akkuspannung aus den oben genannten Gründen auf heute übliche 14,4 V begrenzt ist, können mit der neuen Anordnung ohne Änderungen am Getriebe oder am Motor höhere Drehzahlen erreicht werden. Dadurch besteht außerdem die Möglichkeit, Feldmagneten mit noch höherer Feldstärke einzusetzen. Die von den kräftigeren Magneten verursachte Drehzahlminderung läßt sich ohne weiteres mit Hilfe des dazwischengeschalteten Spannungswandlers kompensieren bzw. sogar überkompensieren.

Der Elektromotor braucht bei der neuen Schaltungsanordnung nicht notwendigerweise ein pemanent erregter Gleichstrommotor zu sein. Es kann sich dabei auch um einen Motor mit Feldwicklung handeln, insbesondere wenn aus der Hauptschlußcharakteristik eines entsprechenden Motors Nutzen gezogen werden soll, wie beispielsweise das sehr hohe Anlaufdrehmoment oder die extrem hohe Drehzahl.

Der verwendete Spannungswandler braucht keineswegs geregelt zu sein. Je nach Anwendungsfall genügt ein ungeregelter Hochsetzsteller. Gleichwohl kann es für bestimmte Anwendungen zweckmäßig sein, die Drehzahl oder die Motorspannung unter Verwendung eines Reglers zu stabilisieren.

Wenn ein großer Drehzahlbereich, der auch extrem niedrige Drehzahlen umfaßt, überstrichen werden soll, z.B. um Einschaltrucken zu unterbinden, ist der Spannungswandler zweckmäßigerweise ein Tief-/Hochsetzsteller, womit dem Motor, je nach Betriebsmodus, auch eine Spannung zugeführt werden kann, die kleiner ist als die Akkuspannung.

Die Motordrehzahl läßt sich unabhängig vom Belastungszustand weitgehend dadurch stabilisieren, daß der Spannungswandler einen negativen Ausgangsinnenwiderstand aufweist. Dieser Ausgangsinnenwiderstand ist betragsmäßig kleiner als der Innenwiderstand des Motors, um stabile Verhältnisse zu erzielen.

Ein sehr einfacher Spannungswandler wird erhalten, wenn er eine erste Serienschaltung aufweist, die einen schaltbaren Halbleiter mit Steuereingang sowie eine Induktivität enthält. Je nachdem, ob ein Hochsetzsteller oder ein Tief-/Hochsetzsteller erreicht werden soll, liegt eine zweite Serienschaltung, bestehend aus einer Diode und einem Kondensator parallel zu der Induktivität oder parallel zu dem gesteuerten Halbleiter. Der Motor wiederum liegt, wiederum abhängig von der gewünschten Charakteristik, parallel zu der Diode oder parallel zu dem Kondensator.

Um den gewünschten negativen Innenwiderstand des Spannungswandlers zu erzielen, liegt in Serie mit dem Motor ein Stromfühler, wodurch erreicht werden kann, daß bei zunehmendem Motorstrom auch die Ausgangsspannung des Spannungswandlers entsprechend erhöht wird.

Die Steuerung des Halbleiters erfolgt vorzugsweise mit Hilfe einer Tastverhältnissteuerung, die den Leistungshalbleiter periodisch ein- und ausschaltet, damit die Verluste an dem Leistungshalbleiter niedrig gehalten werden können.

Der Einsatzbereich der neuen Anordnung unterliegt praktisch keiner Beschränkung. So kann es sich um Elektrowerkzeuge, Gartenwerkzeuge, Haushaltsgeräte oder ähnliches handeln.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 das Prinzipschaltbild eines Elektrogerätes mit einem Hochsetzsteller,
Fig. 2 das Prinzipschaltbild eines Elektrogerätes mit einem Tief-/Hochsetzsteller in einer ersten Ausführungsform und
Fig. 3 das Prinzipschaltbild eines Elektrogerätes mit einem Tief-/Hochsetzsteller in einer anderen Ausführungsform.

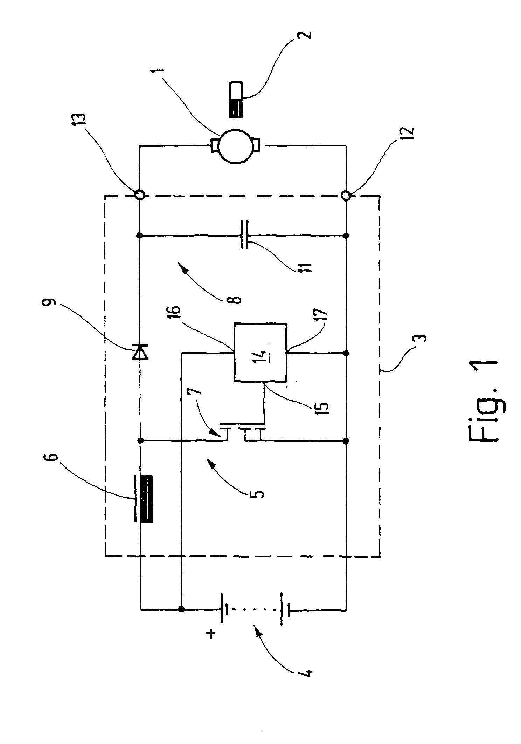

Fig. 1 zeigt in einem Prinzipschaltbild die elektrische Schaltung eines Elektrogeräts, beispielsweise einer Handkreissäge oder eines Rasenmähers, wobei die zugehörigen nicht veranschaulichten Werkzeuge über einen Elektromotor 1 angetrieben sind. Der Elektromotor 1 ist ein permanent erregter Motor, dessen Feld durch ein oder mehrere Permanentmagneten 2 erzeugt wird. Die Stromversorgung des Elektromotors 1 erfolgt über einen Spannungswandler 3 in Gestalt eines Hochsetzstellers aus einem Akkumulator 4, beispielsweise einem aus mehreren Zellen aufgebauten Nickel-Cadmium-Akku. Der Akkumulator 4 sitzt wie bei handgeführten Elektrogeräten üblich in dem nicht veranschaulichten Gerätegehäuse.

Der Hochsetzsteller 3 enthält eingangsseitig eine erste Serienschaltung 5, bestehend aus einem an den Plus-Pol des Akkumulators 4 angeschlossene Induktivität 6 und einem mit der Induktivität 6 in Serie geschalteten Leistungshalbleiter 7 in Gestalt eines selbstsperrenden N-Kanal-Mosfet. Die Drainelektrode des Mosfet 7 liegt dementsprechend an einem Ende der Induktivität 6, während die Sourceelektrode mit dem Minus-Pol des Akkumulators 4 verbunden ist.

Zu dem Leistungshalbleiter 7 liegt eine zweite Serienschaltung 8 parallel. Diese Serienschaltung enthält eine Diode 9 sowie einen Kondensator 11. Die Diode 9 ist anodenseitig mit der Drainelektrode des Leistungshalbleiters 7 bzw. der Induktivität 6 verbunden, während die Kathode an den Kondensator 11 angeschlossen ist, dessen anderes Ende zu dem Minus-Pol des Akkumulators 4 führt. Die Elektroden des Kondensators 11 sind an Ausgangsanschlüsse 12, 13 des Hochsetzstellers 3 angeschlossen. An diesen beiden Ausgangsanschlüssen 12, 13 ist der Elektromotor 1 angeschaltet.

Selbstverständlich enthält die konkret ausgeführte Schaltung gemäß dem Prinzipschaltbild nach Fig. 1 noch einen Hauptschalter, um den Akkumulator 4 elektrisch abzutrennen. Dieser Schalter ist für das Verständnis der Erfindung nicht wesentlich und deswegen auch nicht gezeichnet.

Der Leistungshalbleiter 7 wird an seiner Gateelektrode über einen astabilen Multivibrator 14 angesteuert, dessen Ausgang 15 mit der Gateelektrode verbunden ist. Im übrigen liegt der Multivibrator 14 mit seinen Stromversorgungseingängen 16 und 17 an dem Plus- bzw. dem Minus-Pol des Akkumulators 4. Er gibt an die Gateelektrode eine Rechteckschwingung mit einem festgelegten Tastverhältnis ab.

Die Wirkungsweise der gezeigten Schaltung ist wie folgt:

Wenn nach dem Einschalten des Elektrogerätes der Akkumulator 4 in der gezeigten Weise angeschaltet ist, beginnt der Multivibrator 14 zu schwingen und sein Signal an die Gateelektrode des Leistungshalbleiters 7 abzugeben. Durch die nach plus gehenden Impulse der Schwingungen wird der Leistungshalbleiter 7 durchgesteuert, so daß ein Strom über die Induktivität 6 und den Leistungshalbleiter 7 entsteht. Dieser Strom fließt solange, wie der positive Impuls, der in das Gate des Leistungshalbleiters 7 eingespeist wird, dauert. Sobald der Impuls verschwindet, verschwindet die positive Steuerspannung an der Gateelektrode und der Leistungshalbleiter 7 geht in den Sperrzustand über. Da dieser Zustandsübergang abrupt erfolgt, ist die beim Umschalten auftretende Verlustleistung in dem Leistungshalbleiter 7 klein und es kommt zu einem Freilaufstrom, der aus der Induktivität 6 über die Diode 9 den Kondensator 11 auf eine Spannung auflädt, die größer ist als die Klemmenspannung des Akkumulators 4, da im ausgeschalteten Zustand des Leistungshalbleiters 7 aus der Sicht des Kondensators 11 der Akkumulator 4 und die den Freilaufstrom erzeugende Induktivität 6 in Serie liegen.

Der Motor 1, der an dem Kondensator 11 liegt, erhält eine Spannung, die größer ist als die Spannung des Akkumulators 4. Wie hoch die Spannung an dem Kondensator 11 wird, ergibt sich aus der Dauer des in die Gateelektrode des Leistungshalbleiters 7 eingepeisten positiven Impulses, bezogen auf die Periodendauer der Rechteckschwingung, die von dem Multivibrator 14 abgegeben wird. Außerdem wird die Spannung an dem Kondensator 11 beeinflußt durch die Leistungsentnahme an der Welle des Elektromotors 1.

Für einfache Elektrogeräte, bei denen die Spindeldrehzahl im wesentlichen unveränderlich festliegt, genügt es, dieses Tastverhältnis empirisch zu ermitteln und den Multivibrator 14 entsprechend zu dimensionieren. Eine Regelung oder Einstellung des Tastverhältnisses ist in solchen Fällen nicht erforderlich, weshalb entsprechende Steuereingänge an dem Multivibrator 14 fehlen; sie sind jedoch jederzeit implementierbar. Im übrigen kann der Multivibrator 14 in praktisch jeder bekannten Form ausgeführt sein. Schaltungen finden sich in der Literatur in ausreichender Anzahl, weshalb eine genaue Beschreibung des Aufbaus des Multivibrators 14 entbehrlich ist.

Die Frequenz, mit der der Multivibrator 14 arbeitet, liegt auch aus akustischen Gründen vorzugsweise oberhalb von 20 kHz, damit magnetostriktive Effekte in der Induktivität 6 keine wahrnehmbaren Geräusche erzeugen und die Induktivität mit wenig Eisen auskommt. Zweckmäßigerweise liegt die Frequenz aber noch höher als 50 kHz, damit eine möglichst kleine Induktivität 6 ausreicht.

Selbstverständlich bestünde die Möglichkeit, einen Multivibrator 14 zu verwenden, bei dem über einen Steuereingang das Tastverhältnis variiert werden kann, um dadurch die Spannung an dem Kondensator 11 zu verstellen und in der Folge die Drehzahl des Elektromotors 1.

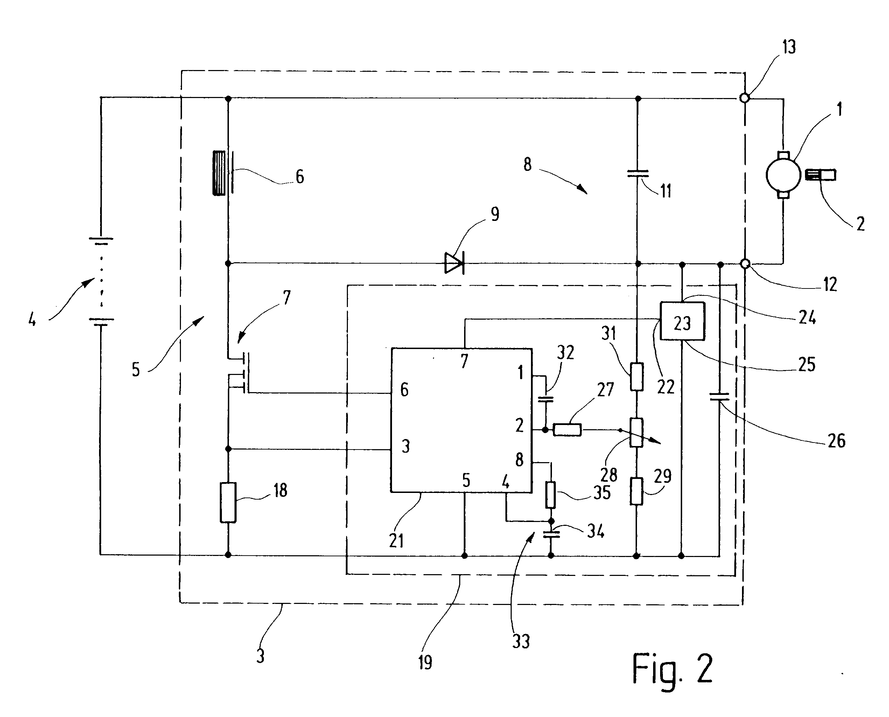

Bei der Schaltung nach Fig. 1 sind nur Motordrehzahlen möglich, die bei unbelastetem Motor 1 größer sind als diejenigen, die sich einstellen würden, würde der Motor 1 ohne den Spannungswandler 3 unmittelbar an den Akkumulator 4 angeschlossen werden. Wenn auch kleinere Leerlaufdrehzahlen gewünscht sind, kann die Schaltung nach Fig. 2 verwendet werden. Soweit in dieser Schaltung Bauelemente verwendet werden, die funktionsmäßig mit Bauelementen der Schaltung nach Fig. 1 übereinstimmen, werden dieselben Bezugszeichen verwendet.

Der Spannungswandler 3 bei der Schaltung nach Fig. 2 ist ein sogenannter Hoch-/Tiefsetzsteller, was bedeutet, daß je nach Tastverhältnis bei der Ansteuerung des Leistungshalbleiters 7 für den Motor 1 Spannungen erzeugt werden können, die kleiner oder größer sind als die Klemmenspannung des Akkumulators 4.

Im einzelnen ist die Schaltung wie folgt aufgebaut:

Die erste Serienschaltung 5 enthält zusätzlich in Serie einen Stromfühlerwiderstand 18, der zwischen der Sourceelektrode und dem Minus-Pol des Akkumulators 4 geschaltet ist.

Die zweite Serienschaltung 8 liegt, abweichend von dem vorher erläuterten Ausführungsbeispiel, parallel zu der Induktivität 6, wobei jedoch wiederum die Diode 9 an der Drainelektrode des Leistungshalbleiters 7 angeschlossen ist.

Die Elektroden des Kondensators 11 bilden die Ausgänge 12 und 13 des Spannungswandlers 3, an die der Elektromotor 1 angeschaltet ist.

Die Steuerung des Leistungshalbleiters 7, wiederum ein selbstsperrender N-Kanal-Mosfet, erfolgt mit einem pulsweitenmodulierten Oszillator 19, dessen Kernstück beispielsweise eine integrierte Schaltung 21 vom Typ UCC 3803, zu beziehen bei der Firma Unitrode, sein kann. Die für den Block 21 eingezeichnete Pinbelegung entspricht der der genannten integrierten Schaltung.

Pin 6 bildet den Steuerausgang, der mit der Gateelektrode des Leistungshalbleiters 7 verbunden ist, während Pin 3 der Stromfühlereingang ist, der dementsprechend an der Sourceelektrode angeschaltet ist. Die Pins 5 und 7 bilden die Stromversorgungseingänge, und zwar ist Pin 5 mit dem negativen Pol des Akkumulators 4 verbunden, während Pin 7 an einen Ausgang 22 eines integrierten Konstantspannungsreglers 23 angeschlossen ist. Letzterer liegt mit einem Stromversorgungseingang 24 an der Kathode der Diode 9, während ein anderer Stromversorgungseingang 25 mit dem Minus-Pol des Akkumulators 4 verbunden ist. Zwecks Glättung der Eingangsspannung für den Konstantspannungsregler 23 liegt parallel zu dessen Stromversorgungseingängen 24 und 25 ein Glättungskondensator 26.

Den Steuereingang der Schaltung 21 bildet Pin 2, der über einen Vorwiderstand 27 mit dem Schleifer eines Potentiometers 28 in Verbindung steht. Die beiden Enden des Potentiometers 28 sind über einen Widerstand 29 mit dem negativen Pol des Akkumulators 4 bzw. einem Widerstand 31 mit der Kathode der Diode 9 verbunden. Diese beiden Widerstände 29 und 31 dienen der Eingrenzung des Stellhubs für das Potentiometer 28.

Ein Sieb- oder Integrationskondensator führt außerdem von Pin 2 zu Pin 1. Dieser ist intern mit dem Ausgang eines Differenzverstärkers verbunden, dessen invertierender Eingang an Pin 2 liegt.

Die Grundfrequenz für den Oszillator bestimmt ein RC-Glied 33, dessen Kondensator 34 von Pin 4 zu dem Minus-Pol des Akkumulators 4 führt. Außerdem ist Pin 4 mit Pin 8 über einen Widerstand 35 des RC-Gliedes 33 verbunden.

Der Vollständigkeit halber sei noch erwähnt, daß bei der praktischen Ausführung zusätzlich an Pin 8 ein Siebkondensator angeschlossen ist, der aus Übersichtlichkeitsgründen nicht eingezeichnet ist.

Der innere Aufbau der Schaltung 21 kann dem entsprechenden Datenblatt entnommen werden. Bei der nachstehenden Funktionsbeschreibung des pulsweitenmodulierten Oszillators 19 wird kurz der Innenaufbau mit erläutert.

Der in der Schaltung 21 enthaltene Oszillator arbeitet mit einer Frequenz von ca. 50 kHz, die durch die äußere Beschaltung mit Hilfe des RC-Gliedes 33 festgelegt ist. Das von dem internen Oszillator abgegebene Rechtecksignal wird einem Eingang eines Flip-flops zugeführt. Der Ausgang dieses Flipflops steuert über einen dazwischengeschalteten Treiber die Spannung an Pin 6 und somit den Schaltzustand des Leistungshalbleiters 7. Der an Pin 6 liegende interne Treiber ist in der Lage, einen großen Strom zu liefern, um ein schnelles Umschalten der Gatekapazität zu gewährleisten.

Der andere Eingang des erwähnten Flipflops wird über den Ausgang eines internen Komparators angesteuert, von dem ein Eingang mit Pin 3 verbunden ist. Auf diese Weise wird das Flipflop zurückgeschaltet, wenn ein von der Schaltung 21 durchgeführter Vergleich der an dem Widerstand 18 abfallenden Spannung mit einer über das Potentiometer 28 erzeugten Vergleichsspannung zu einem das Flipflop umschaltenden Signal am Ausgang dieses Komparators führt. Das zweite Signal für den erwähnten Komparator wird erhalten, indem die an dem Potentiometer 28 abgegriffene Spannung mit einer internen Referenzspannung über einen Operationsverstärker verglichen wird. Dieser Operationsverstärker ist gleichzeitig mit Hilfe des Kondensators 32 zu einem Integrator geschaltet.

Durch Verstellen des Potentiometers 28 kann das Pulsweitenverhältnis des pulsweitenmodulierten Oszillators 19 verändert werden. Da die Oberspannung des Potentiometers 28 proportional der Spannung ist, die der Ausgang 12 gegenüber dem Minus-Pol des Akkumulators 4 hat, entsteht gleichzeitig eine Regelung im Sinne einer Stabilisierung der Ausgangsspannung.

Der Spannungswandler 3 arbeitet damit wie folgt:

Nach dem Einschalten des Gerätes ist der Akkumulator 4 in der gezeigten Weise elektrisch angeschaltet. Über die Induktivität 6 und die in Durchlaßrichtung geschaltete Diode 9 entsteht umgehend eine Versorgungsspannung für den Konstantspannungsregler 23, der die Spannung für die Schaltung 21 erzeugt. Der interne Oszillator beginnt zu schwingen und sorgt dafür, daß über Pin 6 der gesteuerte Halbleiter 7 durchgesteuert wird. Der Einschaltzustand des Halbleiters 7 bleibt solange bestehen, bis die an dem Widerstand 18 abfallende Spannung größer wird als ein Bezugswert, der in der oben erläuterten Weise aus der Spannung an dem Potentiometer sowie einem internen Referenzwert abgeleitet ist. Wenn dieses Ereignis eintritt, schaltet der pulsweitenmodulierte Oszillator 19 den Leistungshalbleiter 7 ab.

Während der stromleitenden Phase des Leistungshalbleiters 7 ist ein Strom aus dem Akkumulator 4 über die Induktivität 6, den Leistungshalbleiter 7 und den Stromfühlerwiderstand 18 geflossen. Das Abschalten des Leistungshalbleiters 7 führt zu einem Freilaufstrom, der über die Diode 9 den Kondensator 11 auf- bzw. nachlädt. Die Spannung, auf die der Kondensator 11 aufgeladen wird, hängt vom Puls-Pause-Verhältnis ab, mit dem der pulsweitenmodulierte Oszillator 19 den Leistungshalbleiter 7 ansteuert. Wenn der Puls, verglichen mit der Pause, kurz ist, ist die Spannung im Kondensator 11 gering. Sie steigt mit zunehmener Pulslänge, verglichen mit der auftretenden Pause zwischen benachbarten Impulsen. Der Oszillator arbeitet mit fester Periodendauer, so daß das Tastverhältnis bestimmt wird durch die Zeit, nach der der Spannungsabfall an dem Stromfühlerwiderstand 18 den oben erwähnten einstellbaren Bezugswert überschreitet.

Mit der gezeigten Schaltung ist für den Elektromotor 1 eine Spannungserzeugung möglich, die bei 0 V beginnt. Damit eignet sich die Schaltung für Elektrowerkzeuge oder andere Geräte, die auch mit niedrigen Drehzahlen arbeiten müssen bzw. von denen erwartet wird, daß sie ruckfrei auf die gewünschte Enddrehzahl beschleunigt werden können.

Die Stabilisierung der Spannung für den Elektromotor 1 bzw. der Spannung zwischen den beiden Anschlüssen 12 und 13 geschieht, weil die über das Potentiometer 28 einstellbare Bezugsspannung von der Spannung, die der Ausgangsanschluß 12 gegenüber dem Minus-Pol des Akkumulators 4 führt, abhängig ist. Die Spannung des Ausgangsanschlusses 12 gegenüber dem Minus-Pol ist gleich der Spannung des Akkumulators 4 plus der Spannung an dem Kondensator 11. Da die Spannung an dem Akkumulator 4 in erster Näherung als konstant angenommen werden kann, ist also die Differenzspannung, die an der Widerstandskaskade aus den Widerständen 28, 29 und 31 anliegt, ausschließlich von den Schwankungen der Spannungen an dem Kondensator 11 abhängig. Sobald wegen zunehmender Belastung des Motors 1 die Spannung an dem Kondensator 11 zu sinken beginnt, verkleinert sich der Spannungsabfall an der Widerstandskaskade aus den Widerständen 28, 29 und 31, was zu einer entsprechend verminderten Spannung an Pin 2 führt. Die verminderte Spannung an Pin 2 führt zu einer Vergrößerung des Impulses, verglichen mit der Pause zwischen zwei Impulsen genauso als wäre der Schleifer des Potentiometers 28 weiter in Richtung auf den Widerstand 29 verstellt worden.

Mit der gezeigten Schaltung ist also auch gleichzeitig eine Stabilisierung der Ausgangsspannung des Spannungswandlers 3 zu erreichen. Durch Verstellen des Potentiometers 28 läßt sich innerhalb eines konstruktiv festgelegten Bereiches jede beliebige Ausgangsspannung einstellen und unabhängig von der Belastung am Ausgang konstant halten. Die dem Motor 1 zugeführte Spannung kann entsprechend auf Werte eingestellt werden, die unter der Klemmenspannung des Akkumulators 4 liegen oder aber auf Werte, die deutlich darüber liegen, um entweder eine höhere Leerlaufdrehzahl des Elektromotors 1 zu erreichen als sie zu erzielen wäre, würde der Elektromotor 1 unmittelbar an den Akkumulator 4 angeschlossen werden, oder um bei gegebener Drehzahl das Drehmoment des Motors 1 über jenen Wert hinaus zu erhöhen, der zu erzielen ist, wenn wiederum der Elektromotor 1 ohne den Spannungswandler 3 an den Akkumulator 4 angeschaltet ist.

Der beschriebene Hoch-/Tiefsetzsteller wirkt nach außen sozusagen wie ein Schnellgang eines mechanischen Getriebes (Overdrive).

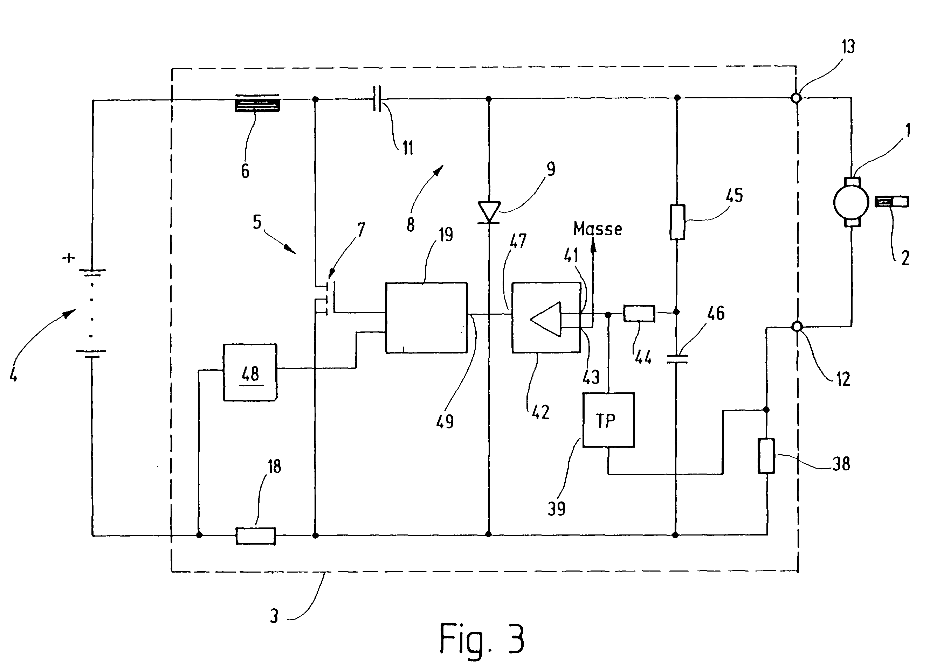

Bei den vorerwähnten Ausführungsbeispielen lag der Elektromotor 1 jeweils parallel zu dem Kondensator 11. Fig. 3 zeigt eine Schaltungsanordnung, bei der der Elektromotor 1 parallel zu der Freilaufdiode 9 liegt; auch diese Schaltung arbeitet als Hoch-/Tiefsetzsteller.

Bei dem Schaltbild nach Fig. 3 sind wiederum wiederkehrende Bauelemente mit denselben Bezugszeichen versehen.

Die erste Serienschaltung 5 ist an den Akkumulator 4 in der gleichen Weise angeschlossen wie bei der Schaltung nach Fig. 2. Hingegen ist die zweite Serienschaltung 8 gedreht, d.h. an der Verbindungsstelle zwischen der Induktivität 6 und dem Halbleiter 7 ist der Kondensator 11 angeschlossen, während die Freilaufdiode 9 von dem Kondensator 11 zu dem Minus-Pol des Akkumulators 4 führt. Allerdings ist abweichend zu Fig. 2 die Kathode der Diode 9 nicht unmittelbar an den Minus-Pol sondern über den Widerstnad 18 angeschaltet. Einer der Ausgangsanschlüsse, der Ausgangsanschluß 13, ist unmittelbar mit der Anode der Diode 9 verbunden, während der andere Ausgangsanschluß 12 über einen weiteren Stromfühlerwiderstand 38 über den Widerstand 18 mit dem Minus-Pol des Akkumulators 4 in Verbindung steht. An diesem Stromfühlerwiderstand 38 wird eine dem Motorstrom proportionale Spannung abgegriffen und einem Umkehrverstärker 39 zugeführt wird, der gleichzeitig als Tiefpaß erster Ordnung arbeitet. Der Umkehrverstärker 39 ist ausgangsseitig mit einem Eingang 41 eines Addierers 42 verbunden. Der Addierer 42 dient als Umkehrverstärker, weshalb sein anderer Eingangsanschluß 43 mit dem Minus-Pol des Akkumulators 4 verbunden ist.

An dem Eingang 41 liegt ferner ein erster Vorwiderstand 44, mit dem ein zweiter Vorwiderstand 45 in Serie geschaltet ist, der mit dem Ausgangsanschluß 13 in Verbindung steht. Von der Verbindungsstelle zwischen den beiden Widerständen 44 und 45 führt ein Kondensator 46 zu dem Minus-Pol des Akkumulators 4.

Der Addierer 42 hat einen Ausgang 47, der an einen Eingang 49 des Pulsweitenmodulators 19 angeschlossen ist. Der Pulsweitenmodulator 19 ist mit seinem Sensoreingang über eine Umkehrstufe 48 mit dem Minus-Pol des Akkumulators 4 und im übrigen in der vorher beschriebenen Weise mit dem Gate des Leistungshalbleiters 7 verbunden; der nicht veranschaulichte Masseanschluß des Pulsweitenmodulators 19 steht mit dem von dem Minus-Pol des Akkumulators 4 abliegenden Anschluß des Stromfühlerwiderstands 18 in Verbindung, so daß der Sensoreingang eine dem Spannungsabfall an dem Stromfühlerwiderstand 18 proportionale Spannung erhält. Der Innenaufbau des Pulsweitenmodulators 19 entspricht im wesentlichen dem aus Fig. 2, lediglich mit dem Unterschied, daß das heiße Ende des Widerstands 31 anstatt mit dem Ausgang 12 verbunden zu sein, einen Eingang 49 darstellt. Die Polarität der Steuerung ist so gewählt, daß eine Erhöhung der Spannung an dem Eingang 49 die Impulsdauer für den Leistungshalbleiter 7 verkürzt.

Die Stromversorgungsanschlüsse für die aktiven Bauelemente in dem Umkehrverstärker 39, dem Addierer 42 und dem pulsweitenmodulierten Oszillator 19 sind der Übersichtlichkeit halber nicht dargestellt; sie sind mit dem von dem Minus-Pol des Akkumulators 4 abliegenden Anschluß des Stromfühlerwiderstands 18 verbunden.

Unmittelbar nach dem Anschalten des Akkumulators 4 an den Eingang des Spannungswandlers 3 beginnt der pulsweitenmodulierte Oszillator 19 zu arbeiten, und zwar startet der Oszillator 19, wie vorher, mit einem Impuls, der den Leistungshalbleiter 7 in den leitenden Zustand steuert. Damit beginnt ein Strom durch die Induktivität 6 zu fließen, der exponentiell ansteigt. Beim Überschreiten einer vorgegebenen Grenze, die der pulsweitenmodulierte Oszillator 19 mit Hilfe des Stromfühlerwiderstands 18 mißt, wird der Leistungshalbleiter 7 gesperrt. Der nun fließende Freilaufstrom lädt den Kondensator 11 über die Diode 9 entsprechend auf. Dieser Vorgang wiederholt sich periodisch.

Während jeder leitenden Phase des Leistungshalbleiters 7 ist außerdem der Kondensator 11 über den leitenden Leistungshalbleiter 7 und den Stromfühlerwiderstand 38 mit den Ausgangsanschlüssen 12 und 13 verbunden und kann seine Spannung an den angeschlossenen Elektromotor 1 abgeben. Während der Sperrphase des Leistungshalbleiters 7 erfolgt hingegen die Aufladung des Kondensators 11.

Die gewählte Spannung an den Ausgängen 12 und 13 wird mit Hilfe der Widerstandskette aus den Widerständen 44 und 45 abgegriffen, über die eine Regelspannung erzeugt wird, die nach Siebung über den Kondensator 46 mit der richtigen Polarität in den Eingang 48 eingespeist wird. Die Polarität ist so gewählt, daß bei sinkender Spannung an dem Anschluß 13 die Phase, während der der Leistungshalbleiter 7 leitend ist, länger wird, um mehr elektrische Energie in die Induktivität 6 und damit in der anschließenden Sperrphase in den Kondensator 11 zu schaffen.

Um darüber hinaus die Motorkennlinie zu kompensieren, die bei steigendem Motorstrom zu einem Drehzahlabfall führt, wird außerdem eine dem Motorstrom proportionale Spannung dazu verwendet, die Spannung an dem Ausgangsanschluß 13 hochzuregeln, um dadurch dem Drehzahlabfall entgegenzuwirken. Diese zusätzliche Spannung wird an dem Stromfühlerwiderstand 38 gewonnen, die über den Umkehrverstärker 39 invertiert sowie gesiebt wird und ebenfalls in den Eingang 41 gelangt. Durch den Addierer wird die dem Strom proportionale Spannung von der aus dem Spannungssignal gewonnene Spannung subtrahiert, um hierdurch den negativen Innenwiderstand zu erzeugen.

Damit die Schaltung stabil arbeiten kann, versteht es sich, daß der Betrag des negativen Innenwiderstandes kleiner ist als der Innenwiderstand des Elektromotors 1.

Bei den gezeigten Ausführungsbeispielen wurde jeweils von einem Elektromotor mit permanenter Felderregung ausgegangen. Es besteht aber auch die Möglichkeit, einen Motor mit Feldwicklung zu verwenden.

Bei einem akkugespeisten Elektrowerkzeug erfolgt die Stromzufuhr zu dem Antriebsmotor über einen statischen bzw. Festkörperspannugswandler, wodurch es möglich ist, bei unverändertem Innenwiderstand des Motors dem Akku größere Ströme zu entnehmen als es ohne den Spannungswandler der Fall wäre, um das Motordrehmoment bei jeder Drehzahl erhöhen zu können.

## Patentansprüche

1. Handgeführte Maschine
mit einem Elektromotor (1) und
mit einem Akkumulator (4), gekennzeichnet durch
einen eingangsseitig an den Akkumulator (4) und ausgangsseitig an den Elektromotor (1) angeschlossenen, aus Halbleitern aufgebauten statischen Festkörperspannungswandler (3), der einen Betriebsmodus aufweist, in dem die an den Elektromotor (1) abgegebene Spannung größer ist als die von dem Akkumulator (4) abgegebene Spannung.

2. Maschine nach Anspruch 1, dadurch gekennzeichnet, daß der Elektromotor (1) ein permanenterregter Gleichstrommotor ist.

3. Maschine nach Anspruch 1, dadurch gekennzeichnet, daß der Elektromotor (1) eine Gleichstrommaschine mit Feldwicklung ist.

4. Maschine nach Anspruch 1, dadurch gekennzeichnet, daß der Akkumulator (4) eine Ausgangsspannung abgibt, die eine Kleinspannung ist.

5. Maschine nach Anspruch 1, dadurch gekennzeichnet, daß die an den Elektromotor (1) abgegebene Spannung maximal 50 V, vorzugsweise maximal 30 V beträgt.

6. Maschine nach Anspruch 1, dadurch gekennzeichnet, daß der Spannungswandler (3) ein Hochsetzsteller ist.

7. Maschine nach Anspruch 1, dadurch gekennzeichnet, daß der Spannungswandler (3) ein Tief-/Hochsetzsteller ist.

8. Maschine nach Anspruch 1, dadurch gekennzeichnet, daß der Spannungswandler (3) einen negativen Ausgangsinnenwiderstand aufweist, der betragsmäßig kleiner ist als der Innenwiderstand des Elektromotors (1).

9. Maschine nach Anspruch 1, dadurch gekennzeichnet, daß der Spannungswandler (3) eine erste Serienschaltung (5) mit einem steuerbaren Halbleiter (7) mit Steuereingang sowie eine Induktivität (6) aufweist.

10. Maschine nach Anspruch 9, dadurch gekennzeichnet, daß der Spannungswandler (3) eine zweite Serienschaltung (8) mit einem Kondensator (11) und einer Diode (9) enthält, wobei die zweite Serienschaltung (8) zu dem steuerbaren Halbleiter (7) parallel liegt.

11. Maschine nach Anspruch 9, dadurch gekennzeichnet, daß der Spannungswandler (3) eine zweite Serienschaltung (8) mit einem Kondensator (11) und einer Diode (9) enthält, wobei die zweite Serienschaltung (8) zu der Induktivität (11) parallel liegt.

12. Maschine nach den Ansprüchen 10 oder 11, dadurch gekennzeichnet, daß der Elektromotor (1) zu dem Kondensator (11) parallel liegt.

13. Maschine nach Anspruch 10, dadurch gekennzeichnet, daß der Elektromotor (1) zu der Diode (9) parallel liegt.

14. Maschine nach den Ansprüchen 10 oder 11, dadurch gekennzeichnet, daß die erste Serienschaltung (5) einen Stromfühler (18) enthält.

15. Maschine nach Anspruch 1, dadurch gekennzeichnet, daß in Serie mit dem Elektromotor (1) ein Motorstromfühler (38) liegt.

16. Maschine nach den Ansprüchen 8 und 15, dadurch gekennzeichnet, daß zur Erzeugung des negativen Ausgangsinnenwiderstands ein von dem Motorstromfühler (38) kommendes Signal mit einem Signal verknüpft wird, das der an dem Elektromotor (1) anstehenden Spannung proportional ist.

17. Maschine nach Anspruch 1, dadurch gekennzeichnet, daß an den Steuereingang des steuerbaren Halbleiters (7) eine Steuerschaltung (14,19) angeschlossen ist, durch die der steuerbare Halbleiter (7) periodisch auf und zu steuerbar ist.

18. Maschine nach Anspruch 17, dadurch gekennzeichnet, daß die Steuerschaltung (19) als Tastverhältnissteuerung geschaltet ist, der den steuerbaren Halbleiter (7) abschaltet sobald der Strom durch den steuerbaren Halbleiter (7) eine festgelegte Grenze übersteigt.

19. Maschine nach Anspruch 1, dadurch gekennzeichnet, daß der steuerbare Halbleiter (7) ein Leistungsmosfet ist.

20. Maschine nach Anspruch 1, dadurch gekennzeichnet, daß sie ein handgeführtes Elektrowerkzeug ist.

21. Maschine nach Anspruch 1, dadurch gekennzeichnet, daß sie ein handgeführtes Gartenwerkzeug ist.

22. Maschine nach Anspruch 1, dadurch gekennzeichnet, daß sie ein handgeführtes Haushaltsgerät ist.

## Claims

1. Hand-held machine with an electric motor (1) and with a battery (4), characterised by a static solid-state voltage transformer (3) which is connected on the input side to the battery (4) and on the output side to the electric motor (1), is made up of semiconductors and has a mode of operation in which the voltage delivered to the electric motor (1) is greater than the voltage delivered by the battery (4).

2. Machine as claimed in Claim 1, characterised in that the electric motor (1) is a permanently excited direct-current motor.

3. Machine as claimed in Claim 1, characterised in that the electric motor (1) is a direct-current machine with a field winding.

4. Machine as claimed in Claim 1, characterised in that the battery (4) delivers an output voltage which is a low voltage.

5. Machine as claimed in Claim 1, characterised in that the voltage delivered to the electric motor (1) is a maximum of 50 V, preferably a maximum of 30 V.

6. Machine as claimed in Claim 1, characterised in that the voltage transformer (3) is a step-up device.

7. Machine as claimed in Claim 1, characterised in that the voltage transformer (3) is a step-down/up device.

8. Machine as claimed in Claim 1, characterised in that the voltage transformer (3) has a negative output internal resistance which is smaller in terms of magnitude than the internal resistance of the electric motor (1).

9. Machine as claimed in Claim 1, characterised in that the voltage transformer (3) has a first series circuit (5) with a controllable semiconductor (7) with control input as well as an inductance (6).

10. Machine as claimed in Claim 9, characterised in that the voltage transformer (3) contains a second series circuit (8) with a capacitor (11) and a diode (9), the second series circuit (8) lying parallel to the controllable semiconductor (7).

11. Machine as claimed in Claim 9, characterised in that the voltage transformer (3) contains a second series circuit (8) with a capacitor (11) and a diode (9), the second series circuit (8) lying parallel to the inductance (11).

12. Machine as claimed in Claims 10 or 11, characterised in that the electric motor (1) lies parallel to the capacitor (11).

13. Machine as claimed in Claim 10, characterised in that the electric motor (1) lies parallel to the diode (9).

14. Machine as claimed in Claims 10 or 11, characterised in that the first series circuit (5) contains a current sensor (18).

15. Machine as claimed in Claim 1, characterised in that a motor current sensor (38) lies in series with the electric motor (1).

16. Machine as claimed in Claims 8 and 15, characterised in that in order to generate the negative output internal resistance a signal coming from the motor current sensor (38) is combined with a signal which is proportional to the voltage occurring at the electric motor (1).

17. Machine as claimed in Claim 1, characterised in that a control circuit (14, 19), by which the controllable semiconductor (7) can be controllably switched on and off periodically, is connected to the control input of the controllable semiconductor (7).

18. Machine as claimed in Claim 17, characterised in that the control circuit (19) is connected as a keying ratio control means which switches off the controllable semiconductor (7) as soon as the current through the controllable semiconductor (7) exceeds a fixed limit.

19. Machine as claimed in Claim 1, characterised in that the controllable semiconductor (7) is a power MOSFET.

20. Machine as claimed in Claim 1, characterised in that it is a hand-held electric tool.

21. Machine as claimed in Claim 1, characterised in that it is a hand-held garden tool.

22. Machine as claimed in Claim 1, characterised in that it is a hand-held domestic appliance.

## Revendications

1. Machine portative, comportant un moteur électrique (1) et un accumulateur (4), caractérisée par un convertisseur de tension monolithique (3) statique, à base de semi-conducteurs, qui est connecté côté entrée à l'accumulateur (4) et côté sortie au moteur électrique (1) et qui présente un mode de fonctionnement, dans lequel la tension délivrée au moteur électrique (1) est supérieure à la tension délivrée par l'accumulateur (4).

2. Machine selon la revendication 1, caractérisée par le fait que le moteur électrique (1) est un moteur à courant continu à excitation permanente.

3. Machine selon la revendication 1, caractérisée par le fait que le moteur électrique (1) est un moteur à courant continu à enroulement d'excitation.

4. Machine selon la revendication 1, caractérisée par le fait que l'accumulateur (4) délivre une tension de sortie qui est une basse tension.

5. Machine selon la revendication 1, caractérisée par le fait que la tension délivrée au moteur électrique (1) est de 50 V maximum, de préférence de 30 V maximum.

6. Machine selon la revendication 1, caractérisée par le fait que le convertisseur de tension (3) est untransformateur élévateur de tension.

7. Machine selon la revendication 1, caractérisée par le fait que le convertisseur de tension (3) est un transformateur abaisseur/élévateur de tension.

8. Machine selon la revendication 1, caractérisée par le fait que le convertisseur de tension (3) présente une résistance interne négative qui, en valeur, est inférieure à la résistance interne du moteur électrique (1).

9. Machine selon la revendication 1, caractérisée par le fait que le convertisseur de tension (3) comporte un premier circuit série (5) avec un semi-conducteur (7) commandé, pourvu d'une entrée de commande, ainsi qu'une inductance (6)

10. Machine selon la revendication 9, caractérisée par le fait que le convertisseur de tension (3) comprend un second circuit série (8) avec un condensateur (11) et une diode (9), le second circuit série (8) étant connecté en parallèle le semi-conducteur commandé (7).

11. Machine selon la revendication 9, caractérisée par le fait que le convertisseur de tension (3) comprend un second circuit série (8) avec un condensateur (11) et une diode (9), le second circuit série (8) étant connecté en parallèle avec l'inductance (6).

12. Machine selon les revendications 10 ou 11, caractérisée par le fait que le moteur électrique (1) est connecté en parallèle avec le condensateur (11).

13. Machine selon la revendication 10, caractérisée par le fait que le moteur électrique (1) est connecté en parallèle avec la diode (9).

14. Machine selon les revendications 10 ou 11, caractérisée par le fait que le premier circuit série (5) contient un détecteur de courant (18).

15. Machine selon la revendication 1, caractérisée par le fait qu'un détecteur de courant moteur (38) est branché en série avec le moteur électrique (1).

16. Machine selon les revendications 8 et 15, caractérisée par le fait que pour produire la résistance interne de sortie négative, on combine un signal provenant du détecteur de courant moteur (38) avec un signal qui est proportionnel à la tension appliquée au moteur électrique (1).

17. Machine selon la revendication 1, caractérisée par le fait qu'un circuit de commande (14, 19) est connecté à l'entrée de commande du semi-conducteur commandé (7), circuit grâce auquel le semi-conducteur commandé (7) peut être ouvert et fermé de manière périodique.

18. Machine selon la revendication 17, caractérisée par le fait que le circuit de commande (19) est branché en commande de rapport cyclique qui coupe le semi-conducteur commandé (7) dès que le courant dans ledit semi-conducteur commandé (7) dépasse un limite prédéterminée.

19. Machine selon la revendication 1, caractérisée par le fait que le semi-conducteur commandé (7) est un transistor de puissance de type mosfet.

20. Machine selon la revendication 1, caractérisée par le fait que celle-ci est un outil électrique portatif.

21. Machine selon la revendication 1, caractérisée par le fait que celle-ci est un outil de jardin portatif.

22. Machine selon la revendication 1, caractérisée par le fait que celle-ci est un appareil ménager portatif.
